(19) Europäisches Patentamt
European Patent Office
Office européen des brevets

(11) **EP 4 517 086 B1**

(12) **EUROPEAN PATENT SPECIFICATION**

(45) Date of publication and mention
of the grant of the patent:
**01.04.2026 Bulletin 2026/14**

(21) Application number: **23830153.5**

(22) Date of filing: **25.06.2023**

(51) International Patent Classification (IPC):
***F03D 17/00*** *(2016.01)*

(52) Cooperative Patent Classification (CPC):
**F03D 17/011; F03D 17/025;** F03D 1/066;
F03D 17/028; F05B 2260/301; F05B 2260/80;
F05B 2270/808; Y02E 10/72

(86) International application number:
**PCT/CN2023/102241**

(87) International publication number:
**WO 2024/001975 (04.01.2024 Gazette 2024/01)**

(54) **MONITORING METHOD AND SYSTEM FOR BOLT AT BLADE ROOT OF FAN**

ÜBERWACHUNGSVERFAHREN UND -SYSTEM FÜR BOLZEN AM SCHAUFELFUSS EINES LÜFTERS

PROCÉDÉ ET SYSTÈME DE SURVEILLANCE POUR BOULON AU NIVEAU D'UNE RACINE DE PALE DE VENTILATEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.06.2022 CN 202210742569**

(43) Date of publication of application:
**05.03.2025 Bulletin 2025/10**

(73) Proprietor: **Shanghai Baiantek Sensing
Technology Co., Ltd.
Shanghai 201210 (CN)**

(72) Inventors:
• **YU, Wei**
**Shanghai 201210 (CN)**
• **ZHAO, Zihao**
**Shanghai 201210 (CN)**
• **GU, Yilong**
**Shanghai 201210 (CN)**

(74) Representative: **Elzaburu S.L.P.
Paseo de la Castellana 259C
Torre de Cristal, planta 28
28046 Madrid (ES)**

(56) References cited:
EP-A- 3 985 249          CN-A- 110 410 284
CN-A- 111 306 011       CN-A- 112 267 981
CN-A- 112 267 981       CN-A- 113 090 472
CN-A- 114 941 610       JP-A- 2020 180 563
JP-A- 2020 180 563       US-A1- 2011 158 806

## Description

## TECHNICAL FIELD

The disclosure relates to the technical field of wind power generation, and particularly relates to a monitoring method and system for bolts at a blade root of a wind turbine.

## BACKGROUND

A wind-driven generator is influenced by irregular wind loads and other environmental loads at its runtime. Its blades, a main wind-energy conversion component of a wind turbine, play an important role in absorbing wind energy and converting this energy into mechanical energy. As a most important bearing structure for wind loads in the wind-driven generator for a long time, the blades are likely to have overload, fatigue and other damage problems. A root of a blade of the wind turbine is connected to a hub by means of a flange and bolts. These bolts bear wind loads and other environmental loads on the entire blade for a long time, resulting in risks such as loosening, overload fracture and fatigue failure of the bolts.

At present, for bolt monitoring of blades of a wind turbine, most monitoring solutions are designed to focus on monitoring of loosening and a pretightening force of a single bolt. Their specific monitoring methods include the following steps: through electromagnetic and laser scanning, whether an interior of a bolt is healthy, whether a bolt and a nut rotate, a bolt pretightening force, displacement and gaps are monitored. These monitoring methods only pay attention to a health state of a single bolt.

The above sensors and monitoring methods developed for bolt monitoring are effective for a single bolt. However, in practical engineering applications, dozens or even hundreds of bolts on the flanges located at the roots of the blades generally need to be monitored, and it is not feasible to mount hundreds of sensors on the flanges in practical engineering. Therefore, such monitoring methods can hardly be popularized in actual practical applications.

Document JP 2020180563 A is known from the prior art. This document discloses a wind power generation system and method for maintaining wind power generation device, the system comprising a wind power generation device for receiving wind and rotating a power generator, a control sensor for measuring a state of the wind power generation device, and a calculation processing unit for calculating information related to the wind power generation device on the basis of the control sensor.

## SUMMARY

An objective of the disclosure is to provide a monitoring method and system for bolts at a blade root of a wind turbine. Whether the bolts are damaged can be monitored, and further a main cause of bolt damage can be determined according to a load monitoring result. A load source for bolt failure can be found fundamentally. In addition, health states of all the bolts at the blade root can be monitored with as few sensors as possible.

In order to achieve the objective, the disclosure provides a monitoring method for bolts at a blade root of a wind turbine. The method includes:

monitoring and obtaining a load on each of the bolts at the blade root, and designating zones where bolts with heavy loads are located as key monitoring zones;
monitoring and obtaining gap changes between the blade root and a hub at all the key monitoring zones; and
determining a health state of the corresponding bolt according to the gap change at each of the key monitoring zones.

According to the invention, the monitoring and obtaining a load on each of the bolts at the blade root specifically includes:

arranging several load sensors at the blade root, the number of the load sensors being less than the number of the bolts;
calibrating the load sensors so as to obtain a load coefficient of each of the load sensors;
computing a moment load on the blade root according to measured values and the load coefficients of all the load sensors; and
obtaining the load on each of the bolts according to a bolt load distribution law.

Optionally, the load sensors are micro electromechanical system (MEMS) fiber-optic load sensors.

Optionally, several temperature sensors are configured to conduct temperature compensation on the load sensors while several load sensors are arranged at the blade root.

Optionally, after the load on each of the bolts is obtained, the load is displayed in a graph form.

Optionally, an interval range of the load on each of the bolts under long-term operation is counted, and the health state of each of the bolts is analyzed according to an accumulated load.

Optionally, the gap changes between the blade root and the hub at all the key monitoring zones are monitored by means of several MEMS fiber-optic displacement sensors.

Optionally, in response to determining that the bolt is damaged, the monitoring method for bolts at a blade root of a wind turbine further includes:
analyzing a load source for the damage of the bolt according to a load monitoring result of the bolt.

On the basis of that, the disclosure further provides a monitoring system for bolts at a blade root of a wind turbine. The system includes:

a load monitoring module including several load sensors arranged at the blade root in a circumferential direction, where the load sensors are configured to monitor and obtain a load on each of the bolts at the blade root, and zones where bolts with heavy loads are located are designated as key monitoring zones;

a displacement monitoring module including several displacement sensors arranged in the key monitoring zones, where the displacement sensors are configured to monitor and obtain gap changes between the blade root and a hub at all the key monitoring zones; and

a determination module configured to determine a health state of the corresponding bolt according to the gap change at each of the key monitoring zones.

Optionally, the monitoring system for bolts at a blade root of a wind turbine further includes several temperature sensors arranged at the blade root. The temperature sensors are configured to conduct temperature compensation on at least one of the load sensors.

The disclosure provides the monitoring method and system for bolts at a blade root of a wind turbine, which have at least one of the following beneficial effects:

1) According to a monitoring principle from the entirety to details, firstly, the load on each of the bolts at the blade root is monitored, and then the gap changes at the key monitoring zones are monitored according to specific circumstances. Whether the bolts are damaged can be monitored, and further a main cause of bolt damage can be determined according to a load monitoring result. A load source for bolt failure can be found fundamentally.

2) Health states of all the bolts at the blade root can be monitored with as few sensors as possible.

3) Through monitoring data, the bolt load distribution law and the load source at the blade root are continuously analyzed, such that a layout position of sensors can be optimized, and a number of sensors can be reduced.

**BRIEF DESCRIPTION OF THE DRAWINGS**

Those of ordinary skill in the art will understand that the accompanying drawings are provided for a better understanding of the disclosure, instead of limiting the scope of the disclosure in any way. In the accompanying drawings:

FIG. 1 is a flow diagram of a monitoring method for bolts at a blade root of a wind turbine according to an example of the disclosure;

FIG. 2 is a schematic structural diagram of a monitoring system for bolts at a blade root of a wind turbine according to an example of the disclosure;

FIG. 3 is a schematic analysis diagram of a moment load at a blade root of a wind turbine according to an example of the disclosure;

FIG. 4 is a schematic distribution diagram of load amplitudes of bolts according to an example of the disclosure;

FIG. 5 is a schematic diagram of load distribution of a zone where each bolt is located according to an example of the disclosure; and

FIG. 6 is a schematic diagram of abnormal gap changes at key monitoring zones according to an example of the disclosure.

In the figures:
1-blade root; 2-hub; 3-load sensor; 4-temperature sensor; 5-MEMS fiber-optic displacement sensor.

**DETAILED DESCRIPTION OF THE EMBODIMENTS**

For making objectives, advantages and features of the disclosure clearer, the disclosure will be further described in detail below in conjunction with the accompanying drawings and specific examples. It should be noted that the drawings are all in a very simplified form and are not drawn to scale, and are only used to facilitate clear illustration of the objectives of examples of the disclosure. In addition, a structure shown in the accompanying drawings is generally part of an actual structure. Particularly, the accompanying drawings need to show different emphases, and in some cases, are drawn to different scales.

The singular terms "a", "an" and "the" used in the disclosure may include plural objects unless otherwise specified. The term "or" used in the disclosure is generally used to have a meaning including "and/or", unless otherwise specified. The term "several" used in the disclosure is generally used to have a meaning including "at least one", unless otherwise specified. The term "at least two" used in the disclosure is generally used to have a meaning including "two or more", unless otherwise specified. In addition, the terms "first", "second" and "third" are merely for descriptive purposes and are not to be construed as indicating or implying their relative importance or implicitly specifying a number of indicated technical features. Therefore, features limited by "first", "second" and "third" may explicitly or implicitly include one or more of the features.

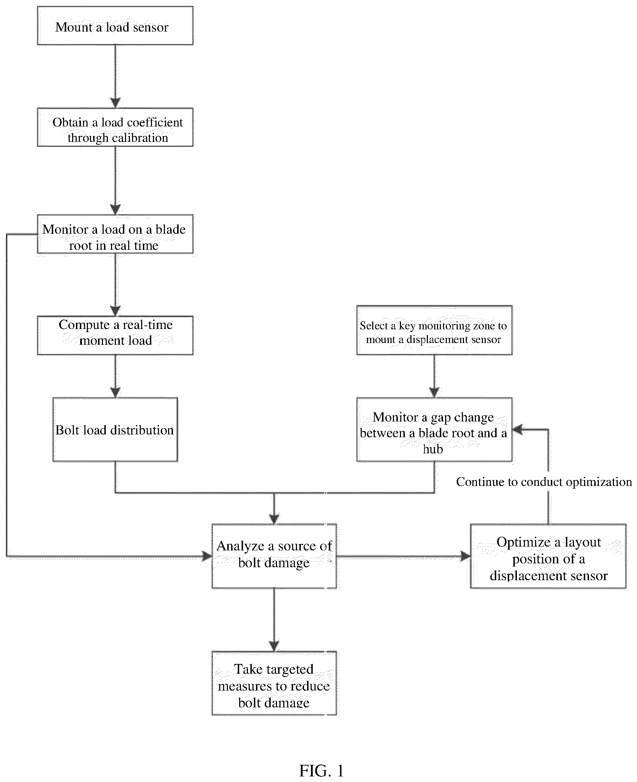

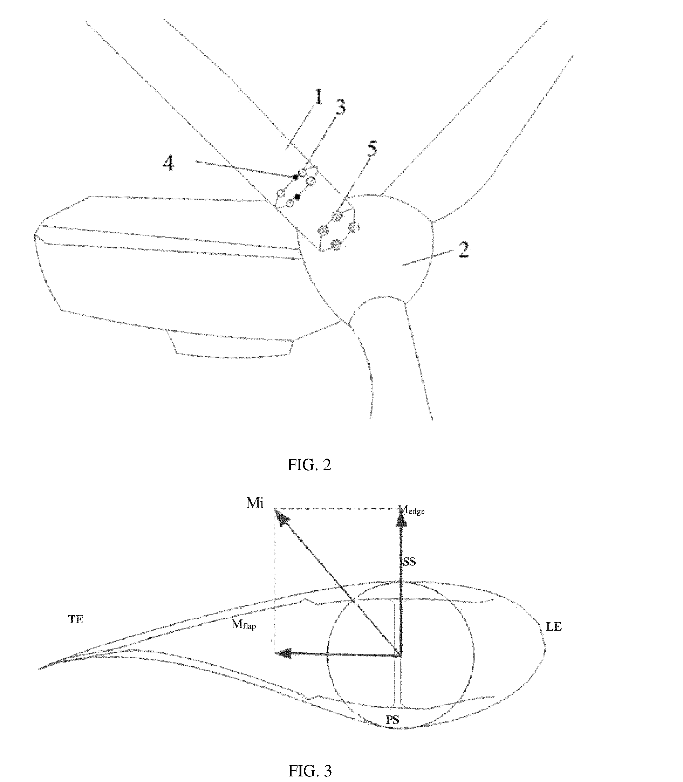

With reference to FIGs. 1 and 2, FIG. 1 is a flow diagram of a monitoring method for bolts at a blade root of a wind turbine according to an example of the disclosure, and FIG. 2 is a schematic structural diagram of a monitoring system for bolts at a blade root of a wind turbine according to an example of the disclosure. The example provides a monitoring method for bolts at a blade root of a wind turbine. The method includes the following steps:

S1, a load on each of the bolts at the blade root 1 is monitored and obtained, and zones where bolts with heavy loads are located are designated as key monitoring zones;
S2, gap changes between the blade root 1 and a hub 2 at all the key monitoring zones are monitored and obtained; and
S3, a health state of the corresponding bolt is determined according to the gap change at each of the key monitoring zones.

According to the disclosure, with a monitoring principle from the entirety to details, firstly, the load on each of the bolts at the blade root 1 is monitored, and then the gap changes at the key monitoring zones are monitored according to specific circumstances. Through both the above steps, whether the bolts are damaged can be monitored, and further a main cause of bolt damage can be determined according to a load monitoring result. A load source for bolt failure can be found fundamentally. For instance, through blade root load monitoring, it is found that a bolt zone of the blade root 1 is damaged due to an unbalanced blade load under the action of large torque. In this case, a propeller may be adjusted and the load may be reduced according to an actual load monitoring result, such that the torque on the bolt can be reduced, and damage can be reduced.

Therefore, health states of all the bolts at the blade root can be monitored with as few sensors as possible. Moreover, through monitoring data, a bolt load distribution law and a load source at the blade root may be continuously analyzed, such that a layout position of sensors can be optimized, and a number of sensors can be reduced.

Specifically, S1 is firstly executed. The load on each of the bolts at the blade root 1 is monitored and obtained, and the zones where bolts with heavy loads are located are designated as the key monitoring zones. The key monitoring zones are easy-to-damage zones of the bolts with the heavy loads, such that subsequent key monitoring in the key monitoring zones is facilitated.

Further, the steps that the load on each of the bolts at the blade root 1 is monitored and obtained specifically include:

several load sensors 3 are arranged at the blade root 1;
the load sensors 3 are calibrated so as to obtain a load coefficient of each of the load sensors 3;
a moment load on the blade root 1 is computed according to measured values and the load coefficients of all the load sensors 3; and
the load on each of the bolts is obtained according to a bolt load distribution law.

In the example, with reference to FIG. 2, the wind turbine includes three blades. The example conducts illustration with one of the blades as an instance. A circular cross section (for instance, about 1.5 m to 1.8 m away from the blade root) near the blade root is uniformly provided with 4 load sensors 3. The load sensors 3 may monitor the load at the blade root in real time. Clearly, a number and distribution of the load sensors 3 are not limited by the disclosure, and may be adjusted according to actual circumstances.

After mounting is completed, the load sensors 3 are calibrated so as to obtain the load coefficient of each of the load sensors 3. In this way, the load on the blade root 1 is monitored in real time. If bending moments $M_{edge}$ and $M_{flap}$ in two directions of an edge (leading edge slat) and a flap (trailing edge flap) of each blade are monitored, a real-time moment load on each blade root 1 is as follows:

$$M = \sqrt{M_{edge}{}^2 + M_{flap}{}^2}$$

Meanwhile, a moment direction of each blade may be determined, as shown in FIG 3. In the figure, LE and TE denote the leading edge slat and the trailing edge flap of the blade, respectively, and SS and PS denote a windward side and leeward side, respectively.

With the moment load and the load coefficient of each of the load sensors 3 as an input basis, according to the bolt load distribution law, the moment load may be allocated to each of the bolts of the blade root 1. In this way, a load distribution of each of the bolts is provided. The step may conduct computation through simulation or a computation formula.

In the example, a computation formula of the load $N_i$ in each bolt zone is as follows:

$$N_i = \frac{M}{\sum y_i{}^2}$$

In the formula, $y_i$ denotes a distance from an ith bolt to a centroid of a bolt group (that is, all the bolts at the blade root 1), and $N_i$ denotes a load on the ith bolt.

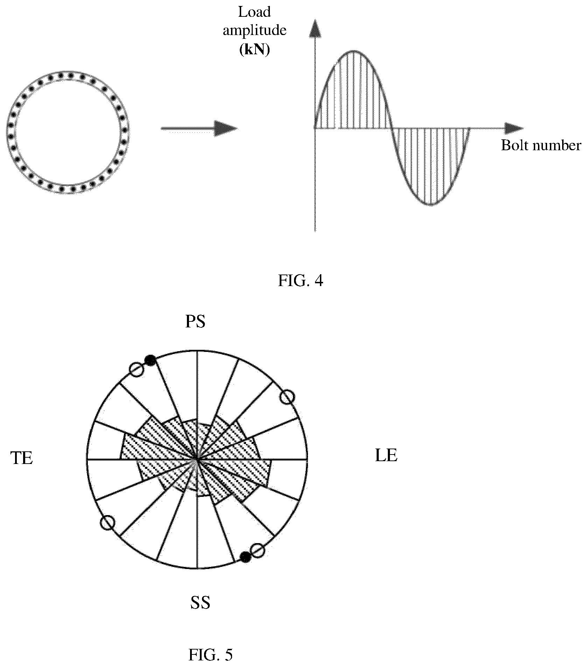

In this way, a real-time load distribution of each bolt can be obtained, as shown in FIG. 4.

Preferably, the load sensors 3 are micro electromechanical system (MEMS) fiber-optic load sensors. An MEMS fiber-optic sensing technology is a cutting-edge technology in the 21st century on the basis of micro/nano mechanics and optics. A magnetic block, an elastic support, an optical reflective micromirror, a light incident and outgoing waveguide system of the technology are all directly integrated into a tiny chip, thus truly implementing all-optical detection and transmission of signals such as currents. A manufactured MEMS chip has advantages of compact structure, integrated package, high parameter consistency, high sensitivity, large dynamic range and high linearity, and is linearly changed in phase and stable and reliable in performance.

In the MEMS chip, a silicon-based sensitive structure is integrated by the MEMS technology, and a signal is detected and read through a fiber-optic detection technology. Therefore, the chip has the common advantages of the MEMS sensing technology and the fiber-optic sensing technology. Moreover, the MEMS fiber-optic sensing technology overcomes mutual restriction of "broadband" and "high precision" of existing sensing technologies, and has characteristics of passivity, wide temperature range, miniaturization, electromagnetic interference resistance, portability, easy networking and maintenance-free, such that accurate long-term measurement can be achieved.

Further, several temperature sensors 4 are configured to conduct temperature compensation on the load sensors 3 while several load sensors 3 are arranged at the blade root 1. In this way, influence of environmental temperature change on load measurement results is reduced, and accuracy of data is ensured.

In the example, a number of the temperature sensors 4 is 1 to 4. That is, one temperature sensor 4 may be used to compensate for one or more load sensors 3 according to actual needs, which is not specifically limited by the disclosure. In the example, the temperature sensor 4 is a fiber-optic temperature sensor.

Further, after the load on each of the bolts is obtained, the load is displayed in a graph form, which looks more intuitive and clear. With reference to FIG. 5, FIG. 5 is a schematic diagram of load distribution of a zone where each bolt is located according to an example of the disclosure.

As mentioned above, preliminary health evaluation is conducted on each of the bolts through load monitoring of the blade root 1, for the bolts of the blade root 1, zones that are with heavy loads and more dangerous and zones that are with low loads and more safe may be preliminarily determined. The bolt zones with heavy loads are designated as the key monitoring zones, such that subsequent key monitoring of the gap changes between the blade root 1 and the hub 2 in the key monitoring zones is facilitated, and further the health states of the bolts are evaluated.

Further, an interval range of the load on each of the bolts under long-term operation is counted, and the health state of each of the bolts is analyzed according to an accumulated load. If a load on a bolt changes (increases or decreases) obviously and exceeds a normal interval range, it is preliminarily determined that the bolt may have something wrong, and timely checking is required.

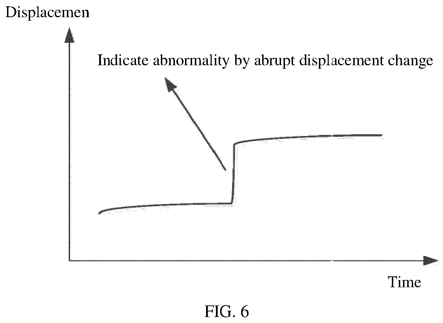

Then, S2 to S3 are executed. The gap changes between the blade root 1 and the hub 2 at all the key monitoring zones are monitored and obtained, and the health state of the corresponding bolt is determined according to the gap change at each of the key monitoring zones. Whether the bolts in the key monitoring zones have problems such as overload, failure, fatigue and loosening may be determined according to the gap changes between the blade root 1 and the hub 2. For instance, as shown in FIG. 6, when a gap between the blade root 1 and the hub 2 is suddenly increased, it may be determined that the bolts in the zone are abnormal.

In the example, the gap changes between the blade root 1 and the hub 2 at all the key monitoring zones are monitored by means of several MEMS fiber-optic displacement sensors 5. A number and positions of the MEMS fiber-optic displacement sensors 5 may be determined according to a number and positions of the key monitoring zones, and are not limited by the disclosure.

Further, in response to determining that the bolt is damaged, the monitoring method for bolts at a blade root of a wind turbine further includes the following step: a load source for damage of the bolt is analyzed according to a load monitoring result of the bolt. For instance, through load monitoring, it is found that a bolt zone of the blade root 1 is damaged due to an unbalanced blade load under the action of large torque. In this case, a propeller may be adjusted and the load may be reduced according to an actual load monitoring result, such that the torque on the bolt can be reduced, and damage can be reduced.

Through mutual assistance of load distribution monitored by the load sensors 3 and the gap changes monitored by the displacement sensors, the health states of the bolts at the blade root 1 are determined, and bolt failure is identified. Then, the load source for the damage of the bolt is analyzed according to the load monitoring result, such that a targeted solution is found. For instance, if long-term loads of the blades are unbalanced and then long-term stress of blades of one bolt is greater than that of bolts of the other two blades, an attitude of the wind turbine may be adjusted in a targeted manner, such that bolt loads can be reduced, and structural damage can be fundamentally reduced. Moreover, through monitoring data, the bolt load distribution law and the load source at the blade root are continuously analyzed, such that a layout position of displacement sensors can be further optimized, and as many bolt states as possible can be monitored with as few sensors mounted as possible.

On the basis of that, with reference to FIG. 2, the disclosure further provides a monitoring system for bolts at a blade root of a wind turbine. The system includes:

a load monitoring module including several load sensors 3 arranged at the blade root 1 in a circumferential direction, where the load sensors 3 are configured to monitor and obtain a load on each of the bolts at the blade root 1, and zones where bolts with heavy loads are located are designated as key monitoring zones;

a displacement monitoring module including several displacement sensors arranged in the key monitoring zones, where the displacement sensors are configured to monitor and obtain gap changes between the blade root 1 and a hub 2 at all the key monitoring zones; and

a determination module configured to determine a health state of the corresponding bolt according to the gap change at each of the key monitoring zones.

In the example, the load sensors 3 are MEMS fiber-optic load sensors. The displacement sensors are MEMS fiber-optic displacement sensors 5. A number and positions of the MEMS fiber-optic displacement sensors 5 may be determined according to a number and positions of the key monitoring zones, and are not limited by the disclosure.

In the example, a type of the determination module is not particularly limited. The determination module may be hardware for executing logical operations, such as a single chip microcomputer, a microprocessor, a programmable logic controller (PLC), a field-programmable gate array (FPGA), or a software program, a functional module, a function, object libraries or dynamic-link libraries that achieve the above functions on the basis of hardware. In addition, those skilled in the art should know how to concretely implement communication between the determination module and other devices.

Further, the monitoring system for bolts at a blade root of a wind turbine further includes several temperature sensors 4 arranged at the blade root 1. The temperature sensors 4 are configured to conduct temperature compensation on at least one of the load sensors 3. In this way, influence of environmental temperature change on load measurement results is reduced, and accuracy of data is ensured.

In the example, a number of the temperature sensors 4 is 1 to 4. That is, one temperature sensor 4 may be used to compensate for one or more load sensors 3 according to actual needs, which is not specifically limited by the disclosure. In the example, the temperature sensor 4 is a fiber-optic temperature sensor.

In conclusion, all the examples of the disclosure provide the monitoring method and system for bolts at a blade root of a wind turbine. According to a monitoring principle from the entirety to details, firstly, the load on each of the bolts at the blade root is monitored, and then the gap changes at the key monitoring zones are monitored according to specific circumstances. Whether the bolts are damaged can be monitored, and further a main cause of bolt damage can be determined according to a load monitoring result. A load source for bolt failure can be found fundamentally. In addition, health states of all the bolts at the blade root can be monitored with as few sensors as possible, such that difficulty of monitoring can be reduced, and a more practical effect can be achieved.

What are described above are only preferred examples of the disclosure, and are not intended to limit the disclosure. The scope of protection is defined by the appended patent claims.

**Claims**

1. A monitoring method for bolts at a blade root of a wind turbine, comprising:

    monitoring and obtaining a load on each of the bolts at the blade root, and designating zones where bolts with heavy loads are located as key monitoring zones;
    monitoring and obtaining gap changes between the blade root and a hub at all the key monitoring zones; and
    determining a health state of the corresponding bolt according to the gap change at each of the key monitoring zones, wherein
    the monitoring and obtaining a load on each of the bolts at the blade root specifically comprises:

        arranging several load sensors at the blade root, the number of the load sensors being less than the number of the bolts;
        calibrating the load sensors so as to obtain a load coefficient of each of the load sensors;
        computing a moment load on the blade root according to measured values and the load coefficients of all the load sensors; and
        obtaining the load on each of the bolts according to a bolt load distribution law.

2. The monitoring method for bolts at a blade root of a wind turbine according to claim 1, wherein the load sensors are MEMS fiber-optic load sensors.

3. The monitoring method for bolts at a blade root of a wind turbine according to claim 1, wherein after the load on each of the bolts is obtained, the load is displayed in a graph form.

4. The monitoring method for bolts at a blade root of a wind turbine according to claim 1, wherein an interval range of the load on each of the bolts under long-term operation is counted, and the health state of each of the bolts is analyzed according to an accumulated load.

5. The monitoring method for bolts at a blade root of a wind turbine according to claim 1, wherein the gap changes between the blade root and the hub at all the key monitoring zones are monitored by means of several MEMS fiber-optic displacement sensors.

6. The monitoring method for bolts at a blade root of a wind turbine according to claim 1, wherein in response to determining that the bolt is damaged, the monitoring method for bolts at a blade root of a wind turbine further comprises:
analyzing a load source for the damage of the bolt according to a load monitoring result of the bolt.

7. A monitoring system for bolts at a blade root of a wind turbine, configured to implement the monitoring method for bolts at a blade root of a wind turbine according to any one of claims 1-6, comprising:

a load monitoring module comprising several load sensors arranged at the blade root in a circumferential direction, wherein the load sensors are configured to monitor and obtain a load on each of the bolts at the blade root, and zones where bolts with heavy loads are located are designated as key monitoring zones;
a displacement monitoring module comprising several displacement sensors arranged in the key monitoring zones, wherein the displacement sensors are configured to monitor and obtain gap changes between the blade root and a hub at all the key monitoring zones; and
a determination module configured to determine a health state of the corresponding bolt according to the gap change at each of the key monitoring zones.

**Patentansprüche**

1. Verfahren zur Überwachung von Befestigungsschrauben an einer Rotorblattwurzel einer Windenergieanlage, **dadurch gekennzeichnet, dass** das Verfahren folgende Schritte umfasst:

Überwachen und Erfassen der auf jede einzelne Schraube an der Blattwurzel wirkenden Last, und Festlegen der Bereiche, in denen Schrauben mit höherer Lastbelastung angeordnet sind, als Schwerpunktüberwachungsbereiche;
Überwachen und Erfassen der Veränderung des Spalts zwischen der Blattwurzel und der Nabe in allen festgelegten Schwerpunktüberwachungsbereichen;
Beurteilen des Zustands der jeweiligen Schraube auf Basis der Spaltveränderung in dem entsprechenden Schwerpunktüberwachungsbereich;
wobei der Schritt des Überwachens und Erfassens der Schraubenlast konkret folgende Teilschritte umfasst:

Anordnen einer Mehrzahl von Lastsensoren an der Blattwurzel, wobei die Anzahl der Lastsensoren geringer ist als die Anzahl der Schrauben;
Kalibrieren der Lastsensoren zum Ermitteln eines Lastkoeffizienten für jeden Lastsensor;
Berechnen des auf die Blattwurzel wirkenden Biegemoments basierend auf den Messwerten aller Lastsensoren und deren Lastkoeffizienten;
Ermitteln der auf jede einzelne Schraube wirkenden Lastgröße gemäß einem Gesetzmäßigkeitsmodell der Schraubenlastverteilung.

2. Verfahren nach Anspruch 1, **dadurch gekennzeichnet, dass** die Lastsensoren als faseroptische MEMS-Lastsensoren ausgeführt sind.

3. Verfahren nach Anspruch 1, **dadurch gekennzeichnet, dass** die ermittelte Lastgröße jeder Schraube in einer diagrammartigen Darstellung visualisiert wird.

4. Verfahren nach Anspruch 1, **dadurch gekennzeichnet, dass** der Wertebereich der Lastgrößen jeder Schraube unter Dauerbetriebsbedingungen statistisch erfasst und der Zustand jeder Schraube anhand der kumulierten Lastverlaufshistorie analysiert wird.

5. Verfahren nach Anspruch 1, **dadurch gekennzeichnet, dass** die Veränderung des Spalts zwischen Blattwurzel und Nabe in den Schwerpunktüberwachungsbereichen durch eine Mehrzahl von faseroptischen MEMS-Wegsensoren überwacht wird.

6. Verfahren nach Anspruch 1, **dadurch gekennzeichnet, dass** das Verfahren im Falle der Beurteilung einer Schraubenbeschädigung ferner den folgenden Schritt umfasst:
Analysieren der für die Beschädigung ursächlichen Lastquelle auf Basis der Lastüberwachungsergebnisse der betreffenden Schraube.

7. System zur Überwachung von Befestigungsschrauben an einer Rotorblattwurzel einer Windenergieanlage zur Durchführung des Verfahrens nach einem der Ansprüche 1 bis 6, **dadurch gekennzeichnet, dass** das System umfasst:

ein Lastüberwachungsmodul, das eine umfangsseitig an der Blattwurzel angeordnete Mehrzahl von Lastsensoren aufweist, wobei die Lastsensoren dazu eingerichtet sind, die auf die Schrauben wirkende Last zu überwachen und zu erfassen, und wobei Bereiche mit höher belasteten Schrauben als Schwerpunktüberwachungsbereiche festgelegt werden;
ein Wegüberwachungsmodul, das eine in den Schwerpunktüberwachungsbereichen angeordnete Mehrzahl von Wegsensoren aufweist, wobei die Wegsensoren dazu eingerichtet sind, die Spaltveränderung zwischen Blattwurzel und Nabe in diesen Bereichen zu überwachen und zu erfassen;

ein Beurteilungsmodul, das dazu eingerichtet ist, den Zustand der jeweiligen Schraube anhand der Spaltveränderung im entsprechenden Schwerpunktüberwachungsbereich zu beurteilen.

## Revendications

1. Procédé de surveillance de boulons au niveau du pied de pale d'une éolienne, **caractérisé en ce qu'**il comprend :

   la surveillance et l'acquisition de conditions de charge subies par chaque boulon au niveau du pied de pale, et la désignation de zones où se trouvent les boulons soumis à des charges plus élevées comme zones de surveillance clés ;
   la surveillance et l'acquisition de variations d'un jeu entre le pied de pale et un moyeu au niveau de toutes les zones de surveillance clés ;
   l'évaluation d'un état de santé des boulons correspondants en fonction des variations du jeu dans chaque zone de surveillance clé ;
   dans lequel l'étape consistant à surveiller et à acquérir les conditions de charge subies par chaque boulon au niveau du pied de pale comprend spécifiquement :

   le déploiement d'une pluralité de capteurs de charge au niveau du pied de pale, le nombre de capteurs de charge étant inférieur au nombre de boulons ;
   l'étalonnage des capteurs de charge afin d'obtenir un coefficient de charge pour chaque capteur de charge ;
   le calcul de la charge de moment de flexion subie par le pied de pale, sur la base de valeurs mesurées par tous les capteurs de charge et des coefficients de charge ;
   l'acquisition d'une magnitude de la charge subie par chaque boulon en fonction d'une loi de répartition de la charge sur les boulons.

2. Procédé de surveillance de boulons au niveau du pied de pale d'une éolienne selon la revendication 1, **caractérisé en ce que** les capteurs de charge sont des capteurs de charge à fibres optiques MEMS.

3. Procédé de surveillance de boulons au niveau du pied de pale d'une éolienne selon la revendication 1, **caractérisé en ce que**, après avoir obtenu les magnitudes de la charge subie par chaque boulon, les magnitudes de la charge sont affichées sous forme de graphique.

4. Procédé de surveillance de boulons au niveau du pied de pale d'une éolienne selon la revendication 1, **caractérisé par** la détermination statistique d'une plage d'intervalles de la charge subie par chaque boulon pendant un fonctionnement à long terme, et l'analyse de l'état de santé de chaque boulon sur la base des conditions de charge accumulées.

5. Procédé de surveillance de boulons au niveau du pied de pale d'une éolienne selon la revendication 1, **caractérisé par** la surveillance des variations du jeu entre le pied de pale et le moyeu au niveau de toutes les zones de surveillance clés à l'aide de la pluralité de capteurs de déplacement à fibres optiques MEMS.

6. Procédé de surveillance de boulons au niveau du pied de pale d'une éolienne selon la revendication 1, **caractérisé en ce que**, lorsqu'un dommage aux boulons est déterminé, le procédé de surveillance de boulons au niveau du pied de pale d'une éolienne comprend en outre :
   l'analyse d'une source de charge causant le dommage aux boulons sur la base des résultats de la surveillance de la charge sur les boulons.

7. Système de surveillance de boulons au niveau du pied de pale d'une éolienne pour mettre en œuvre le procédé de surveillance de boulons au niveau du pied de pale d'une éolienne selon l'une quelconque des revendications 1 à 6, **caractérisé en ce qu'**il comprend :

   un module de surveillance de charge comprenant une pluralité de capteurs de charge disposés circonférentiellement au niveau du pied de pale, dans lequel les capteurs de charge sont configurés pour surveiller et acquérir des conditions de charge subies par chaque boulon au niveau du pied de pale, et des zones où se trouvent les boulons soumis à des charges plus élevées sont désignées comme zones de surveillance clés ;
   un module de surveillance de déplacement comprenant une pluralité de capteurs de déplacement disposés au niveau des zones de surveillance clés, dans lequel les capteurs de déplacement sont configurés pour surveiller et acquérir des variations d'un jeu entre le pied de pale et un moyeu au niveau des zones de surveillance clés ; et
   un module d'évaluation configuré pour déterminer un état de santé des boulons correspondants en fonction des variations du jeu dans chaque zone de surveillance clé.

FIG. 1

FIG. 2

FIG. 3

FIG. 4

FIG. 5

Displacemen

Indicate abnormality by abrupt displacement change

Time

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020180563 A